# EUROPEAN PATENT APPLICATION

(11) **EP 4 170 497 A1**
(43) Date of publication of application: **26.04.2023**
(21) Application number: 22214119.4
(22) Date of filing: 16.12.2022
(51) Int. Cl.: G06F 9/50, G06F 9/54, G06F 12/02

(54) **ACCESS CONTROL METHOD AND APPARATUS FOR SHARED MEMORY, ELECTRONIC DEVICE AND AUTONOMOUS VEHICLE**

(30) Priority: 24.12.2021 CN 202111605154
(71) Applicant: Beijing Baidu Netcom Science Technology Co., Ltd., Beijing 100085 (CN)
(72) Inventor: DONG, Lei, Beijing, 100085 (CN)
(74) Representative: Maiwald GmbH

(57) **Abstract**

An access control method for a shared memory includes: creating (S101) and initializing the shared memory, the shared memory initialized including a plurality of region configuration objects, a plurality of block configuration objects and a plurality of data buffers; determining (S102) at least one target block according to a volume of data to be written corresponding to a first process; and writing (S103) the data by the first process into a target data buffer corresponding to the at least one target block, storing configuration information of the at least one target block to a region configuration object corresponding to a target region, and storing configuration information of the target data buffer to a block configuration object corresponding to the at least one target block.

## Description

### FIELD

The present disclosure generally relates to a driverless technology and an operating system in the field of artificial intelligence technology, and more particularly to an access control method and apparatus for a shared memory, an electronic device and an autonomous vehicle.

### BACKGROUND

In the same host, different modules may be in different process spaces. In order to speed up the program execution efficiency and improve the system performance, communications among multiple processes in the same host may be realized by a shared memory.

When multiple processes need to communicate through the shared memory, it is usually pre-agreed that one of the multiple processes starts first and creates a shared memory of a specified size, and after the initialization of the memory is completed, other processes start, and the shared memory will be mapped by other processes to their own process spaces. After that, the multiple processes can communicate through the shared memory, typically, one process writes data to the shared memory, and other processes search or read the data. The problem existing in the related art is that the configuration of the shared memory is fixed and does not support writing of data of an adaptive length.

### SUMMARY

Embodiments of the present disclosure provide an access control method and apparatus for a shared memory, an electronic device and an autonomous vehicle, which realize writing of data of an adaptive length.

According to a first aspect of the present disclosure, an access control method for a shared memory is provided. The method includes: creating and initializing the shared memory, the shared memory initialized including a plurality of region configuration objects, a plurality of block configuration objects and a plurality of data buffers; determining at least one target block according to a volume of data to be written corresponding to a first process; and writing the data by the first process into a target data buffer corresponding to the at least one target block, storing configuration information of the at least one target block to a region configuration object corresponding to a target region, and storing configuration information of the target data buffer to a block configuration object corresponding to the at least one target block.

According to a second aspect of the present disclosure, an access control apparatus for a shared memory is provided. The apparatus includes a creating module, a determining module, and a writing module. The creating module is configured to create and initialize the shared memory. The shared memory initialized includes a plurality of region configuration objects, a plurality of block configuration objects and a plurality of data buffers. The determining module is configured to determine at least one target block according to a volume of data to be written corresponding to a first process. The writing module is configured to: write the data by the first process into a target data buffer corresponding to the at least one target block, store configuration information of the at least one target block to a region configuration object corresponding to a target region, and store configuration information of the target data buffer to a block configuration object corresponding to the at least one target block.

According to a third aspect of the present disclosure, an electronic device is provided. The electronic device includes: at least one processor; and a storage component communicatively connected with the at least one processor. The storage component has stored therein instructions executable by the at least one processor. The instructions, when executed by the at least one processor, cause the at least one processor to execute the method as described in the first aspect.

According to a fourth aspect of the present disclosure, a non-transitory computer-readable storage medium is provided. The non-transitory computer-readable storage medium has stored therein computer instructions, and the computer instructions are configured to cause a computer to execute the method as described in the first aspect.

According to a fifth aspect of the present disclosure, a computer program product is provided. The computer program product includes computer programs, and the computer programs are stored in a readable storage medium. At least one processor of an electronic device can read the computer programs from the readable storage medium, and execute the computer programs to cause the electronic device to perform the method as described in the first aspect.

According to a sixth aspect of the present disclosure, an autonomous vehicle is provided. The autonomous vehicle includes the electronic device as described in the third aspect.

The technical solutions according to the present disclosure realize writing of data of an adaptive length into the shared memory.

It should be understood that the content described in this section is not intended to identify key or critical features of embodiments of the present disclosure, nor is it intended to limit the scope of the present disclosure. Other features of the present disclosure will become readily understood from the following description.

### BRIEF DESCRIPTION OF THE DRAWINGS

The accompanying drawings are used for better understanding of the present disclosure, and do not constitute a limitation to the present disclosure, in which:
FIG 1 is a schematic flowchart of an access control method for a shared memory according to embodiments of the present disclosure;
FIG 2 is a schematic diagram of a shared memory according to embodiments of the present disclosure;
FIG 3 is a schematic diagram of a header object of a shared memory according to embodiments of the present disclosure;
FIG 4 is a schematic diagram showing that a process accesses a shared memory according to embodiments of the present disclosure;
FIG 5 is a schematic block diagram of an access control apparatus for a shared memory according to embodiments of the present disclosure; and
FIG 6 is a schematic block diagram of an electronic device for implementing an access control method for a shared memory according to embodiments of the present disclosure.

### DETAILED DESCRIPTION

Explanatory embodiments of the present disclosure will be described below with reference to the accompanying drawings. The descriptions made below include various details of embodiments of the present disclosure to facilitate understanding of the present disclosure and should be considered as explanatory only. Accordingly, those ordinarily skilled in the art will recognize that various changes and modifications can be made to the embodiments described herein without departing from the scope of the present disclosure. Also, for clarity and conciseness, descriptions on well-known functions and constructions are omitted from the following descriptions.

In embodiments of the present disclosure, a shared memory is optimized in structure. The shared memory is logically divided into regions, blocks, and data buffers. Each region may include one or more blocks, and each block corresponds to a data buffer. Configuration information of blocks included in a region is stored by a region configuration object, and configuration information of a data buffer corresponding to a block is stored by a block configuration object. In a data writing procedure, one or more blocks are determined according to a length of data to be written, and the data to be written is written into one or more data buffers corresponding to the one or more blocks. At the same time, configuration information of the one or more data buffers is written into a block configuration object corresponding to the one or more blocks, and configuration information of the one or more blocks is written into a region configuration object of a corresponding region. In this way, the number of blocks included in a region is determined by the length of the data to be written, thereby realizing writing of data of an adaptive length.

Embodiments of the present disclosure provide an access control method and apparatus for a shared memory, an electronic device, a storage medium, a program product and an autonomous vehicle, which are applicable to a driverless technology and an operating system in the filed of artificial intelligence technology, and more specifically to an operating system of an in-vehicle system, so as to write data of an adaptive length into the shared memory.

In the following, the access control method for a shared memory will be described in detail with reference to specific embodiments. It will be understood that the specific embodiments described below may be combined with each other, and same or similar concepts or procedures may not be repeated in some embodiments.

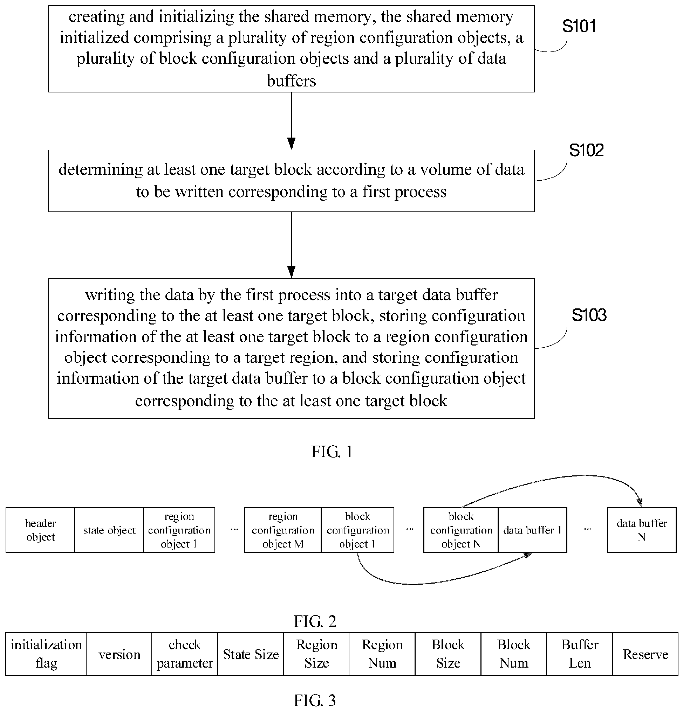

FIG 1 is a schematic flowchart of an access control method for a shared memory according to embodiments of the present disclosure. An execution body of the method is an access control apparatus for a shared memory, and the apparatus may be implemented in a form of software and/or hardware. As shown in FIG 1, the method includes the following steps.

In step S101, the shared memory is created and initialized, the shared memory initialized includes a plurality of region configuration objects, a plurality of block configuration objects and a plurality of data buffers.

In this step, a process that creates and initializes the shared memory may be any one of a plurality of processes that need to communicate through the shared memory. For example, the shared memory may be created and initialized by a process that starts and runs first, and other processes that start and run thereafter update configuration information of the shared memory initialized to their own processes. In the present disclosure, the process that starts and runs first is not limited to a specific process.

The shared memory is logically divided into regions, blocks, and data buffers. Each region may include one or more blocks, each block points to a data buffer, each data buffer points to a segment of continuous memory, and the block is a minimum unit to allocate the shared memory. In order to manage the regions, the blocks, and the data buffers, the structure of the shared memory includes a plurality of region configuration objects, a plurality of block configuration objects and a plurality of data buffers. Each region configuration object is configured to store configuration information of blocks included in this region. For example, each region configuration object includes flag(s) or index(s), a data length, or a reading/writing states of blocks included in this region. Each block configuration object is configured to store configuration information of a data buffer corresponding to this block. For example, each block configuration object includes an address, a data length, or a reading/writing state of the data buffer corresponding to this block.

In step S 102, at least one target block is determined according to a volume of data to be written corresponding to a first process.

The first process may be any one of a plurality of processes. When the first process needs to write data to the shared memory, the number of blocks (i.e., the number of data buffers) required thereby is determined according to the volume (i.e., a length) of the data to be written.

For example, if the length of the data to be written is 20, and a size of the data buffer pointed to by each block is 10, it is determined that the number of blocks required is 2, i.e., 2 target blocks are determined. For example, if the length of the data to be written is 25, and the size of the data buffer pointed to by each block is 10, it is determined that the number of blocks required is 3, i.e., 3 target blocks are determined.

In step S103, the data to be written is written by the first process into a target data buffer corresponding to the at least one target block, configuration information of the at least one target block is stored to a region configuration object corresponding to a target region, and configuration information of the target data buffer is stored to a block configuration object corresponding to the at least one target block.

The first process writes the data to be written into at least one target data buffer pointed to by the at least one target block to realize the writing of the data, and at the same time, the configuration information of each of the at least one target block is stored to the block configuration object of the corresponding target block, for example, an effective data length of the target data buffer pointed to by each target block is written into the block configuration object of the target block; and the configuration information of the at least one target block is stored to the region configuration object of the corresponding target region, for example, a flag or an index number, an effective data length and so on of at least one target block included in the corresponding region are written into the corresponding region configuration object. In this way, the number of blocks included in a region is determined by the data to be written, that is, a length of an available memory corresponding to a region is variable, and the process does not need to write data according to a fixed length, so as to realize writing of data of an adaptive length.

In the method according to embodiments of the present disclosure, each region in the shared memory may include one or more blocks, each block corresponds to a data buffer, one or more target blocks are determined according to the length of the data to be written, and the data to be written is written into one or more data buffers corresponding to the one or more target blocks. In this way, a length of an available memory corresponding to a region varies based on the data to be written, thereby realizing writing of data of an adaptive length.

On the basis of the above embodiments, the structure of the shared memory and how to create and initialize the shared memory are first described below.

Optionally, the structure of the shared memory may refer to FIG 2. As shown in FIG 2, the shared memory includes a header object, a state object, region configuration objects, block configuration objects, and data buffers. For example, the number of the region configuration objects is M, the number of the block configuration objects is N, and the number of the data buffers is N.

Optionally, a structure of the header object may refer to FIG 3. As shown in FIG 3, the header object includes an initialization flag, a version, a check parameter (such as a check sum), a size of the state object (State Size for short), a size of a region configuration object (Region Size for short), the number of the region configuration objects (Region Num for short), a size of a block configuration object (Block Size for short), the number of the block configuration objects (Block Num for short), a length of a data buffer (Buffer Len for short), and a reserved field (Reserve for short).

Optionally, the initialization flag is used to indicate whether the initialization of the shared memory is completed. That is, the initialization flag is a validity flag of the shared memory. The version indicates a configuration version of the shared memory for subsequent compatibility support. The check parameter indicates a check value (such as the check sum) of a part or all of the data in the header object. The State Size indicates a memory size occupied by the state object. The Region Size indicates a memory size occupied by each region configuration object. The Region Num indicates the number of the region configuration objects continuously configured as shown in FIG 2, and for example is M. The Block Size indicates a memory size occupied by each block configuration object. The Block Num indicates the number of the block configuration objects continuously configured as shown in FIG 2, and for example is N. The Block Num is consistent with the number of the data buffers. The Buffer Len indicates a length of each data buffer, which is a minimum length unit for memory allocation. The Reserve indicates an extended reserved field.

Optionally, the state object is configured to store a write protection state, a region index, a block index, a memory updating time and the like of the shared memory at present. The region index is a next writing index, i.e., a flag of a region to be written next time. The block index is a next writing index, i.e., a flag of a block to be written next time. Each time new data is written into the shared memory, the region index and the block index will be updated. The memory updating time is updated when the shared memory is read or written.

Optionally, the region configuration object is configured to store the configuration information of the blocks included in this region, such as a starting index, an effective data length, reading and writing states of at least one block corresponding to this region.

Optionally, the block configuration object is configured to store the configuration information of the data buffer corresponding to this block, such as an offset address, an effective data length, reading and writing states of the data buffer corresponding to this block.

Referring to the structure of the shared memory as described in the above embodiments, the creation and initialization of the shared memory are described as follows: the shared memory is created by a first running process; a header object is created based on a base address of the shared memory; attribute parameters of the plurality of region configuration objects, attribute parameters of the plurality of block configuration objects and attribute parameters of the plurality of data buffers are added in the header object according to parameters of the first running process; and the plurality of region configuration objects, the plurality of block configuration objects and the plurality of data buffers are created.

The first running process creates the shared memory through a standard system call interface (such as shm_open), and this interface has a process security attribute. For a plurality of processes passed into the same memory name (identification flag), only one process can create the shared memory. Therefore, after the first running process creates the shared memory, other processes that start and run thereafter will fail to create the shared memory, which can avoid creating multiple copies of the shared memory.

The first running process creates the header object based on the base address of the shared memory, sets the initialization flag in the header object to an invalid state, and sets the check parameter to invalid data to indicate that the initialization is not completed; then, the first running process sets the attribute parameters of the plurality of region configuration objects, the attribute parameters of the plurality of block configuration objects and the attribute parameters of the plurality of data buffers in the header object according to its own parameters, including setting the version, the State Size, the Region Size, the Region Num, the Block Size, the Block Num, and the Buffer Len.

Afterwards, the first running process creates the state object next to the head object and initializes the state object, and then continuously creates a corresponding number of region configuration objects next to the state object according to the Region Num and initializes the region configuration objects, and then continuously creates a corresponding number of block configuration objects next to the last region configuration object according to the Block Num and initializes the block configuration objects. Each block points to a data buffer, and each data buffer points to a segment of continuous memory. Through such configurations, the shared memory supports reading of data of a variable length.

Finally, the first running process determines the check value of the header object, writes the check value into the check parameter, and updates the initialization flag to a valid state. For example, the first running process calculates the check sum of some data in the header object, and writes the check sum into the check parameter. As a result, the initialization of the shared memory is completed.

For processes other than the first running process, i.e., other processes that start and run after the first running process, they need to update their own parameters according to the shared memory initialized, after the shared memory is created and initialized by the first running process, so as to realize the writing and reading of the shared memory.

Optionally, the initialization flag and the check parameter are checked by another process. In response to determining that the initialization flag is in a valid state, and the check parameter is consistent with a check value of the another process, a configuration parameter of the another process is updated according to the attribute parameters of the plurality of the region configuration objects, the attribute parameters of the plurality of block configuration objects and the attribute parameters of the plurality of data buffers. Afterwards, when the another process writes data into the shared memory, at least one target block is determined according to the configuration parameter of the another process and a volume of data to be written corresponding to the another process.

When another process runs and tries to create a shared memory, since the first running process has already created the shared memory, the another process fails to create the shared memory and enters a delayed awaiting state. Then, it is determined whether the initialization of the shared memory is completed according to the initialization flag and the check parameter in the shared memory created by the first running process. For the check parameter, the check value of the header object is calculated by the another process, and is compared with the check parameter in the shared memory. In response to determining that the check value of the header object calculated by the another process is consistent with the check parameter in the shared memory, the check is successful. After it is determined that the initialization of the shared memory is completed, the another process reads the State Size in the header object. In response to determining that the State Size in the header object is inconsistent with a State Size in parameters of the another process itself, an error is reported and the another process exits. In response to determining that the State Size in the header object is consistent with the State Size in the parameters of the another process itself, the another process continues to read the Region Size in the header object. In response to determining that the Region Size in the header object is inconsistent with a Region Size in the parameters of the another process itself, an error is reported and the another process exits. In response to determining that the Region Size in the header object is consistent with the Region Size in the parameters of the another process itself, the another process continues to read the Block Size in the header object. In response to determining that the Block Size in the header object is inconsistent with a Block Size of the another process, an error is reported and the another process exits. In response to determining that the Block Size in the header object is consistent with the Block Size of the another process, the another process reads the Region Num, the Block Num and Buffer Len in the header object, and updates them to the configuration parameters of the another process, so as to achieve adaptive parameter configuration. By the shared memory checking procedure and the error reporting and exiting procedures, abnormal configuration of the shared memory is avoided.

Through the above procedures, the first running process completes the creation and initialization of the shared memory. After the initialization of the shared memory is completed, other processes update the configuration information of the shared memory to their own processes to support the adaptive parameter configuration. This procedure has no mandatory requirements for a starting sequence of multiple processes.

In addition, after multiple processes normally start and complete the above procedures, if any process is restarted, the procedures performed by the restarted process are similar to that performed by the another process. Specifically, the process is restarted and tries to create a shared memory, since the shared memory has already been created, the restarted process fails to create the shared memory. The restarted process checks the initialization flag and the check parameter of the shared memory already created; and after the check succeeds, the configuration parameter of the restarted process is updated. Afterwards, when the restarted process writes data to the shared memory, at least one target block is determined according to the configuration parameter of the restarted process and a volume of data to be written corresponding to the restarted process. Therefore, with the method according to embodiments of the present disclosure, when a process suffers to an abnormal situation and is restarted, and other processes do not need to restart, the restarted process can automatically restore a communication relationship with other processes.

In the following, a writing procedure of the shared memory will be illustrated.

The first process determines a first number of target blocks according to the volume of the data to be written; the block index is acquired from the state object; and the first number of blocks starting from the block index are determined as the at least one target block. The first process writes the data to be written into the target data buffer corresponding to the at least one target block, and stores the configuration information of the at least one target block to the region configuration object corresponding to the target region, and stores the configuration information of the target data buffer to the block configuration object corresponding to the at least one target block.

For example, if the length of the data to be written is 25, and the size of the data buffer pointed to by each block is 10, it is determined that the first number of the target blocks is 3. After that, the first process sets the write protection state in the state object of the shared memory to be valid (only one process is allowed to write data at a time) to obtain write protection, and reads the region index from the state object, and a region corresponding to the region index is the target region, i.e., the region to be written. It can be understood that if the region corresponding to the region index is being read, the region index will be moved downwards to a writable region, and the write protection state in the region configuration object of the target region is set to be valid (i.e., reading is not allowed), then the block index is read from the state object, and 3 blocks are allocated consecutively starting from the block index (if the allocation reaches the last block index and still is not enough, then circulate back to the starting block index), i.e., 3 target blocks are determined, a write protection state in the block configuration object of the target block is set to be valid (i.e., reading is not allowed), a starting index and an ending index of the target block are stored to the region configuration object of the target region, and the data to be written is written to the data buffer corresponding to the target block. Afterwards, the block index and the region index are updated, that is, the block index is updated to an index of a block after the last target block, and the region index is updated to an index of a region after the last target region, and the above-described write protection states are restored, thereby completing the data writing. Since a region may be composed of one or more blocks, the available memory length corresponding to the region is variable and can be determined according to the length of the data to be written, so as to support reading and writing of data of a variable length.

Optionally, after reading and writing the shared memory, the memory updating time in the state object may be updated to a current time to indicate the time when the shared memory is last used. In response to determining that the memory updating time does not change within a preset period of time, the shared memory is released, so as to ensure that unused shared memory can be cleared in time, and this part of shared memory can be reallocated, thereby realizing the automatic clearing of the shared memory.

In the following, a reading procedure of the shared memory will be illustrated.

Whether data to be read exists in the shared memory is determined by a second process; and in response to determining that the data to be read exists in the shared memory, the data to be read is read.

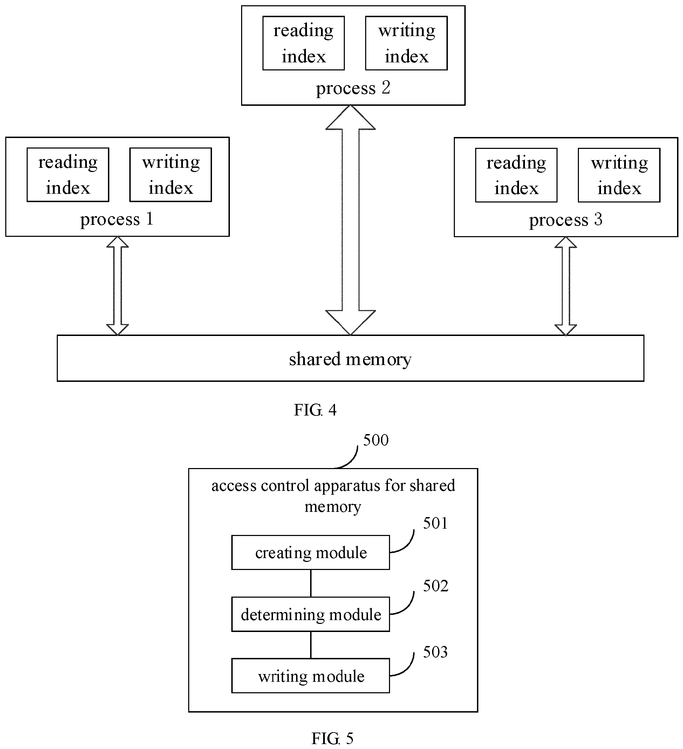

Referring to FIG 4, parameters of each process itself includes a reading index and a writing index. The writing index is the region index copied from the state object of the shared memory, and indicates a next region to be written in the shared memory. The reading index is consistent with the writing index, and indicates a region to be read.

It is determined whether a writing index of the second process is consistent with the region index in the state object of the shared memory, if the writing index of the second process is inconsistent with the region index, it indicates that there is new data written to the shared memory, resulting in a change in the region index, so the writing index of the second process needs to be updated to the region index. Then, it is determined whether the writing index of the second process updated is consistent with a reading index of the second process, if the writing index of the second process updated is inconsistent with the reading index of the second process, it is determined that the data to be read exists in the shared memory, and the data to be read is read according to the reading index of the second process, and the reading index is updated after the reading is completed.

For example, assuming that the reading index and the writing index of the second process are both 2, and the region index of the shared memory changes from 2 to 3 after data writing. At this time, the writing index of the second process is inconsistent with the region index, and the writing index of the second process is updated to 3, indicating that the next region to be written in the shared memory is region 3. At this time, the updated writing index 3 of the second process is inconsistent with the reading index 2 of the second process, and it is determined that data to be read exists in region 2 of the shared memory. A read protection state of region 2 is set to be valid to indicate that region 2 is being read, so as to prevent data writing. A starting index and an ending index of blocks as well as an effective data length in the region configuration object of region 2 are acquired, data in the data buffers corresponding to the blocks is copied to the second process, and finally the read protection state is restored, the reading index of the second process is updated to 3, thereby completing the data reading. The method according to embodiments of the present disclosure supports multiple processes to read data from the shared memory at the same time, thereby improving the data reading efficiency.

FIG 5 is a schematic block diagram of an access control apparatus for a shared memory according to embodiments of the present disclosure. As shown in FIG 5, the access control apparatus 500 includes a creating module 501, a determining module 502 and a writing module 503.

The creating module 501 is configured to create and initialize the shared memory. The shared memory initialized includes a plurality of region configuration objects, a plurality of block configuration objects and a plurality of data buffers.

The determining module 502 is configured to determine at least one target block according to a volume of data to be written corresponding to a first process.

The writing module 503 is configured to: write the data by the first process into a target data buffer corresponding to the at least one target block, store configuration information of the at least one target block to a region configuration object corresponding to a target region, and store configuration information of the target data buffer to a block configuration object corresponding to the at least one target block.

In an embodiment, the creating module 501 includes a first creating unit, a second creating unit and a third creating unit.

The first creating unit is configured to create the shared memory by a first running process.

The second creating unit is configured to create a header object based on a base address of the shared memory.

The third creating unit is configured to: add attribute parameters of the plurality of region configuration objects, attribute parameters of the plurality of block configuration objects and attribute parameters of the plurality of data buffers in the header object according to parameters of the first running process; and create the plurality of region configuration objects, the plurality of block configuration objects and the plurality of data buffers.

In an embodiment, the first process is another process other than the first running process or is a restarted process, and the header object further includes an initialization flag and a check parameter. The writing module 503 includes a checking unit, a first updating unit, and a first determining unit.

The checking unit is configured to check the initialization flag and the check parameter by the another process.

The first updating unit is configured to update a configuration parameter of the another process according to the attribute parameters of the plurality of the region configuration objects, the attribute parameters of the plurality of block configuration objects and the attribute parameters of the plurality of data buffers, in response to determining that the initialization flag is in a valid state, and the check parameter is consistent with a check value of the another process.

The first determining unit is configured to determine the at least one target block according to the configuration parameter of the another process and a volume of data to be written corresponding to the another process.

In an embodiment, the access control apparatus 500 further includes a first setting unit and a second setting unit.

The first setting unit is configured to set the initialization flag to an invalid state and set the check parameter to invalid data.

The second setting unit is configured to: determine a check value of the header object, write the check value of the header object into the check parameter, and update the initialization flag to the valid state.

In an embodiment, the shared memory initialized further includes a state object, and the state object includes a block index. The determining module 502 includes a second determining unit, an acquiring unit, and a third determining unit.

The second determining unit is configured to determine a first number of target blocks according to the volume of the data to be written corresponding to the first process.

The acquiring unit is configured to acquire the block index from the state object.

The third determining unit is configured to determine the first number of blocks starting from the block index as the at least one target block.

In an embodiment, the state object further includes a region index, and a region corresponding to the region index is the target region.

In an embodiment, access control apparatus 500 further includes a second updating unit. The second updating unit is configured to update the block index and the region index.

In an embodiment, the state object further includes a memory updating time; and the access control apparatus 500 further includes a third updating unit. The third updating unit is configured to modify the memory updating time to a current time.

In an embodiment, the access control apparatus 500 further includes a releasing unit. The releasing unit is configured to release the shared memory in response to determining that the memory updating time does not change within a preset period of time.

In an embodiment, the access control apparatus 500 further includes a fourth determining unit and a reading unit. The fourth determining unit is configured to determine by a second process whether data to be read exists in the shared memory. The reading unit is configured to read the data to be read in response to determining that the data to be read exists in the shared memory.

In an embodiment, the fourth determining unit includes a first judging unit, a fourth updating unit, a second judging unit and a fifth determining unit.

The first judging unit is configured to determine whether a writing index of the second process is consistent with the region index.

The fourth updating unit is configured to update the writing index of the second process to the region index, in response to determining that the writing index of the second process is inconsistent with the region index.

The second judging unit is configured to determine whether the writing index of the second process updated is consistent with a reading index of the second process.

The fifth determining unit is configured to determine that the data to be read exists in the shared memory, in response to determining that the writing index of the second process updated is inconsistent with the reading index of the second process.

In an embodiment, the reading unit is configured to: read the data to be read according to the reading index of the second process; and update the reading index of the second process after the reading is completed.

The apparatus according to embodiments of the present disclosure may be used to execute the access control method as described in the method embodiments hereinbefore, and has similar implementation principles and technical effects to the access control method, which will not be elaborated here.

According to embodiments of the present disclosure, the present disclosure further provides an electronic device and a non-transitory computer-readable storage medium having stored therein instructions.

According to embodiments of the present disclosure, the present disclosure further provides a computer program product. The computer program product includes computer programs, and the computer programs are stored in a readable storage medium. At least one processor of an electronic device can read the computer programs from the readable storage medium, and execute the computer programs to cause the electronic device to perform the technical solution as described in any embodiments hereinbefore.

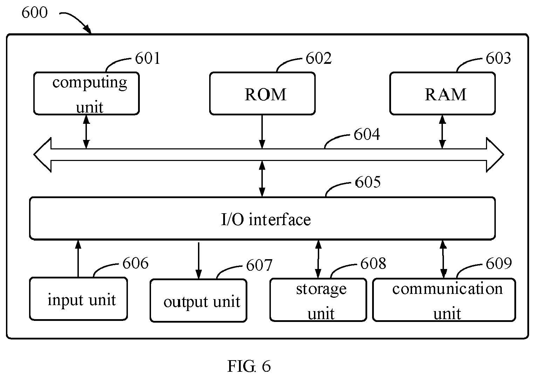

FIG 6 is a schematic block diagram of an electronic device for implementing the access control method for a shared memory according to embodiments of the present disclosure. The electronic device is intended to represent various forms of digital computers, such as a laptop computer, a desktop computer, a workstation, a personal digital assistant, a server, a blade server, a mainframe computer and other suitable computers. The electronic device can also represent various forms of mobile apparatuses, such as personal digital processing, a cellular phone, a smart phone, a wearable device and other similar computing apparatuses. The components shown herein, their connections and relationships as well as their functions are merely examples, and are not intended to limit the implementations of the present disclosure as described and/or claimed herein.

As shown in FIG 6, the electronic device 600 includes a computing unit 601, which can perform various suitable actions and processing according to a computer program stored in a read-only memory (ROM) 602 or a computer program loaded from a storage unit 608 to a random access memory (RAM) 603. In the RAM 603, various programs and data required for operations of the device 600 may also be stored. The computing unit 601, the ROM 602 and the RAM 603 are connected to each other through a bus 604. An input/output (I/O) interface 605 is also connected to the bus 604.

Multiple components in the electronic device 600 are connected to the I/O interface 605, including: an input unit 606, such as a keyboard, a mouse, etc.; an output unit 607, such as various types of displays, speakers, etc.; and the storage unit 608, such as a disk, an optical disc, etc.; and a communication unit 609, such as a network card, a modem, a wireless communication transceiver, etc. The communication unit 609 allows the device 600 to exchange information/data with other devices through a computer network such as the Internet and/or various telecommunication networks.

The computing unit 601 may be various general-purpose and/or special-purpose processing components with processing and computing capabilities. Some examples of the computing unit 601 include, but are not limited to, a central processing unit (CPU), a graphics processing unit (GPU), various dedicated artificial intelligence (AI) computing chips, various computing units that run machine learning model algorithms, a digital signal processor (DSP), and any suitable processor, controller, microcontroller, etc. The computing unit 601 executes the various methods and processes described above, such as the access control method for a shared memory. For example, in some embodiments, the access control method may be implemented as a computer software program, which is tangibly contained in a machine-readable medium, such as the storage unit 608. In some embodiments, part or all of the computer program may be loaded and/or installed onto the device 600 via the ROM 602 and/or the communication unit 609. When the computer program is loaded into the RAM 603 and executed by the computing unit 601, one or more steps of the access control method as described above can be executed. Alternatively, in other embodiments, the computing unit 601 may be configured to perform the access control method in any other suitable manner (for example, by means of firmware).

According to embodiments of the present disclosure, the present disclosure further provides an autonomous vehicle. The autonomous vehicle includes the electronic device as described in the above embodiments. For example, the electronic device is a control device in the autonomous vehicle.

The above various embodiments of the systems and technologies described herein can be implemented in a digital electronic circuit system, an integrated circuit system, a field programmable gate array (FPGA), an application specific integrated circuit (ASIC), an application-specific standard product (ASSP), a system of a system on chip (SOC), a load programmable logic device (CPLD), a computer hardware, firmware, software, and/or a combination thereof. These various embodiments may include: being implemented in one or more computer programs, which may be executed and/or interpreted on a programmable system including at least one programmable processor, the programmable processor may be a dedicated or general-purpose programmable processor that can receive data and instructions from a storage system, at least one input device and at least one output device, and transmit the data and instructions to the storage system, the at least one input device and the at least one output device.

The program codes used to implement the method of the present disclosure can be written in any combination of one or more programming languages. These program codes can be provided to a processor or controller of a general-purpose computer, a special-purpose computer or other programmable data processing devices, so that when the program codes are executed by the processor or controller, the functions/operations specified in the flowcharts and/or block diagrams are implemented. The program codes can be executed entirely on a machine, partly executed on a machine, partly executed on a machine and partly executed on a remote machine as an independent software package, or entirely executed on a remote machine or a server.

In the context of the present disclosure, a machine-readable medium may be a tangible medium, which may contain or store a program for use by an instruction execution system, an apparatus or a device or for use in combination with an instruction execution system, an apparatus or a device. The machine-readable medium may be a machine-readable signal medium or a machine-readable storage medium. The machine-readable medium may include, but is not limited to, an electronic, magnetic, optical, electromagnetic, infrared or semiconductor system, apparatus or device or any suitable combination of the foregoing. More specific examples of the machine-readable storage medium may include electrical connection based on one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device or any suitable combination of the foregoing.

In order to provide interaction with a user, the systems and technologies described here can be implemented on a computer, which has: a display apparatus for displaying information to the user (for example, a CRT (cathode ray tube) or LCD (liquid crystal display) monitor); and a keyboard and pointing apparatus (for example, a mouse or a trackball), through which the user can provide input to the computer. Other types of apparatuses can also be used to provide interaction with the user; for example, the feedback provided to the user can be any form of sensory feedback (for example, visual feedback, auditory feedback or tactile feedback); and input from the user can be received in any form (including acoustic input, voice input or tactile input).

The systems and technologies described here can be implemented in a computing system that includes back-end components (for example, as a data server), or a computing system that includes middleware components (for example, an application server), or a computing system that includes front-end components (for example, a user computer with a graphical user interface or a web browser, through which the user can interact with the embodiments of the systems and technologies described herein), or a computing system that includes any combination of such back-end components, middleware components or front-end components. The components of the system can be connected to each other through any form or medium of digital data communication (for example, a communication network). Examples of the communication network include: a local area network (LAN), a wide area network (WAN), and the Internet.

The computer system may include a client and a server. The client and the server are generally far away from each other and usually interact through a communication network. The relationship between the client and the server will be generated by a computer program that runs on a corresponding computer and has a client-server relationship with each other. The server may be a cloud server, also known as a cloud computing server or a cloud host, which is a host product in a cloud computing service system to solve the defect of difficult management and weak business scalability existed in the traditional physical host and VPS service ("Virtual Private Server", or "VPS" for short). The server may also be a server of a distributed system, or a server combined with a blockchain.

It should be understood that the various forms of flows shown above can be used to reorder, add or delete steps. For example, the respective steps described in the present disclosure may be executed in parallel, or may be executed sequentially, or may be executed in a different order, which will be not limited herein, as long as the desired result of the technical solution disclosed in the present disclosure can be achieved.

The foregoing specific embodiments do not constitute limitation on the protection scope of the present disclosure. Those skilled in the art should understand that various modifications, combinations, sub-combinations and substitutions can be made according to design requirements and other factors.

## Claims

1. An access control method for a shared memory, comprising:
creating (S101) and initializing the shared memory, wherein the shared memory initialized comprises a plurality of region configuration objects, a plurality of block configuration objects and a plurality of data buffers;
determining (S102) at least one target block according to a volume of data to be written corresponding to a first process; and
writing (S103) the data by the first process into a target data buffer corresponding to the at least one target block, storing configuration information of the at least one target block to a region configuration object corresponding to a target region, and storing configuration information of the target data buffer to a block configuration object corresponding to the at least one target block.

2. The method according to claim 1, wherein creating (S101) and initializing the shared memory comprises:
creating the shared memory by a first running process;
creating a header object based on a base address of the shared memory;
adding attribute parameters of the plurality of region configuration objects, attribute parameters of the plurality of block configuration objects and attribute parameters of the plurality of data buffers in the header object according to parameters of the first running process; and
creating the plurality of region configuration objects, the plurality of block configuration objects and the plurality of data buffers.

3. The method according to claim 2, wherein the first process is another process other than the first running process or is a restarted process, and the header object further comprises an initialization flag and a check parameter;
wherein determining (S102) at least one target block according to the volume of data to be written corresponding to the first process comprises:
checking the initialization flag and the check parameter by the another process;
updating a configuration parameter of the another process according to the attribute parameters of the plurality of the region configuration objects, the attribute parameters of the plurality of block configuration objects and the attribute parameters of the plurality of data buffers, in response to determining that the initialization flag is in a valid state, and the check parameter is consistent with a check value of the another process; and
determining the at least one target block according to the configuration parameter of the another process and a volume of data to be written corresponding to the another process.

4. The method according to claim 3, wherein before adding the attribute parameters of the plurality of region configuration objects, the attribute parameters of the plurality of block configuration objects and the attribute parameters of the plurality of data buffers in the header object, the method further comprises: setting the initialization flag to an invalid state, and setting the check parameter to invalid data;
wherein after creating the plurality of region configuration objects, the plurality of block configuration objects and the plurality of data buffers, the method further comprises: determining a check value of the header object, writing the check value of the header object into the check parameter, and updating the initialization flag to the valid state.

5. The method according to any one of claims 1 to 4, wherein the shared memory initialized further comprises a state object, and the state object comprises a block index,
wherein determining the at least one target block according to the volume of the data to be written corresponding to the first process comprises:
determining a first number of target blocks according to the volume of the data to be written corresponding to the first process;
acquiring the block index from the state object; and
determining the first number of blocks starting from the block index as the at least one target block.

6. The method according to claim 5, wherein the state object further comprises a region index, and a region corresponding to the region index is the target region,
wherein after storing the configuration information of the target data buffer to the block configuration object corresponding to the at least one target block, the method further comprises:
updating the block index and the region index.

7. The method according to claim 5 or 6, wherein the state object further comprises a memory updating time;
wherein after storing the configuration information of the target data buffer to the block configuration object corresponding to the at least one target block, the method further comprises:
modifying the memory updating time to a current time,
optionally, the method further comprises:
releasing the shared memory, in response to determining that the memory updating time does not change within a preset period of time.

8. The method according to claim 6, further comprising:
determining by a second process whether data to be read exists in the shared memory; and
reading the data to be read in response to determining that the data to be read exists in the shared memory.

9. The method according to claim 8, wherein determining by the second process whether data to be read exists in the shared memory comprises:
determining whether a writing index of the second process is consistent with the region index;
updating the writing index of the second process to the region index, in response to determining that the writing index of the second process is inconsistent with the region index;
determining whether the writing index of the second process updated is consistent with a reading index of the second process; and
determining that the data to be read exists in the shared memory, in response to determining that the writing index of the second process updated is inconsistent with the reading index of the second process.

10. The method according to claim 9, wherein reading the data to be read comprises:
reading the data to be read according to the reading index of the second process; and
updating the reading index of the second process after the reading is completed.

11. An access control apparatus (500) for a shared memory, comprising:
a creating module (501), configured to create and initialize the shared memory, wherein the shared memory initialized comprises a plurality of region configuration objects, a plurality of block configuration objects and a plurality of data buffers;
a determining module (502), configured to determine at least one target block according to a volume of data to be written corresponding to a first process; and
a writing module (503), configured to: write the data by the first process into a target data buffer corresponding to the at least one target block, store configuration information of the at least one target block to a region configuration object corresponding to a target region, and store configuration information of the target data buffer to a block configuration object corresponding to the at least one target block.

12. An electronic device, comprising:
at least one processor; and
a storage component communicatively connected with the at least one processor and having stored therein instructions executable by the at least one processor,
wherein the instructions, when executed by the at least one processor, cause the at least one processor to execute the method according to any one of claims 1 to 10.

13. A non-transitory computer-readable storage medium, having stored therein computer instructions, wherein the computer instructions are configured to cause a computer to execute the method according to any one of claims 1 to 10.

14. A computer program product, comprising computer programs that, when executed by a processor, cause the method according to any one of claims 1 to 10 to be performed.

15. An autonomous vehicle, comprising the electronic device according to claim 12.
